# EUROPEAN PATENT SPECIFICATION

(11) **EP 1 282 550 B1**
(45) Date of publication and mention of the grant of the patent: **06.04.2005**
(21) Application number: 01932409.4
(22) Date of filing: 18.05.2001
(51) Int. Cl.: B62D 1/04

(54) **STEERING DEVICE FOR A DRIVE-BY-WIRE VEHICLE**
LENKEINRICHTUNG FÜR EIN DRIVE-BY-WIRE-FAHRZEUG
DISPOSITIF DE PILOTAGE POUR UN VEHICULE A CONDUITE PAR FIL

(30) Priority: 18.05.2000 NL 1015236; 06.07.2000 NL 1015626
(43) Date of publication of application: 12.02.2003
(73) Proprietor: SKF Engineering & Research Centre B.V., 3430 DT Nieuwegein (NL)
(72) Inventor: KAPAAN, Hendrikus, Jan, NL-3435 DM Nieuwegein (NL); HOLWEG, Eduardus, Gerardus, Maria, NL-2611 NJ Delft (NL); VRIES, Alexander, Jan, Carel, NL-4003 KA Tiel (NL)
(74) Representative: van Westenbrugge, Andries
(86) International application number: PCT/NL2001/000380
(87) International publication number: WO 2001/087687

(56) References cited:
- DE-A- 19 624 686
- DE-A- 19 739 104
- DE-C- 19 755 044
- DE-U- 29 907 180
- US-A- 4 729 254
- US-A- 4 743 883

## Description

The invention is related to a steering device for drive-by-wire functions in a vehicle, comprising a base which can be fixed to the vehicle interior at the location of the driver, and two steering grips at opposite sides of the base, said steering grips being coupled and being moveable with respect to the base in mutually opposite directions along a curved trajectory formed according to a circular arc.

Such a steering device is disclosed in DE-U-29907180. According to said prior art steering device, the steering action is transferred by means of a cable drive. Such cable drive has the disadvantage that it is prone to wear. Furthermore the steering forces are relatively high due to internal friction in the cable drive.

The object of the invention is to provide a steering device which does not have these disadvantages. Said object is achieved in that each steering grip has a tooth rack which is curved according to the circular arc, pinions being rotatably accommodated in the base which engage the curved tooth racks, wherein the pinions each engage a central tooth wheel, said central tooth wheel being connectable to a steering control.

The base can either be fixed permanently or through a click-on system in the vehicle interior. Also, the base can be fixed to a moveable support, which can be changed between a left-hand drive or a right-hand drive position.

The steering device according to the invention does not provide the usual rotational steering movement of the conventional steering wheel, but instead provides opposite movements of a pair of handgrips. Thus, the driver of the car which is equipped with the steering device according to the invention can still grip the steering grips with both hands. Also, the driver can steer by gripping only one steering grip with one hand.

Moreover, as in the case of the conventional steering wheel, movements in opposite directions are imposed on the pair of steering grips, the movements of which to a large extend resemble the opposite rotational movements on the opposite sides of the conventional steering wheel.

As a result, the driver does not have to adjust his normal driving habits too much, which would make the steering device according to the invention quite acceptable to the average driver.

In order to provide the driver with the normal "feel" of the conventional steering wheel, which "feel" provides useful information concerning car behaviour etc, the steering grips are moveable from their neutral position under the influence of a resistance device simulating steering resistance, e.g. a spring or an electric motor. Furthermore, at least one sensor is provided for sensing a movement of the handgrips, said sensor being in closed loop configuration with a steering control device.

The steering grips may be carried out with any convenient shape which enhances the driver comfort. For instance, each steering grip may have a straight or arc-shaped outer circumference. Also, each steering grip can have an arc-shaped rod, connected to a slide which is slidable supported on the base, the rod and slide of each steering grip being connected through a spoke.

Furthermore, the base carries a head-up screen or LCD screen for displaying vehicle control and performance data, telecommunication means e.g. telephone, route planning and an airbag.

With the aim of enhancing the proper use of the steering device of the invention, signalling means are provided for signalling a left-hand and a right-hand turn.

The steering grips may be movable in parallel, or at an angle with respect to each other. Each steering grip can be slidable along the base by means of a linear bearing e.g. a plain bearing. Said base may be used for other functions, and may comprise a display and operating buttons, e.g. for accelerating/decelerating, shifting indicators, lightning, route planning, telephone. According to a further embodiment, each steering grip can be slidable according to a curved trajectory, the curved trajectory of each steering grip being formed according to a circular arc.

A hand rest can also form part of the base. This hand rest provides a convenient support for the hands of the driver, and also protects the handgrips from accidental actuation by means of the driver's knee.

The invention is also related to a combination comprising a steering device according to one of the preceding claims, and a mechanically operated backup system for controlling prime vehicle safety functions, such as steering and braking in case of a power failure. According to a preferred embodiment, locking means are provided for locking the steering grips with respect to the base in the case of a power failure, said fixed base being linked to the backup system and being released from a fixed position to a rotatable position in the case of said power failure.

Also, the steering device may be applied in combination with a steering column structure comprising one or more foot pedals for e.g. acceleration and/or breaking.

The invention will now be described further with reference to an embodiment of the steering device according to the invention as shown in the drawings.

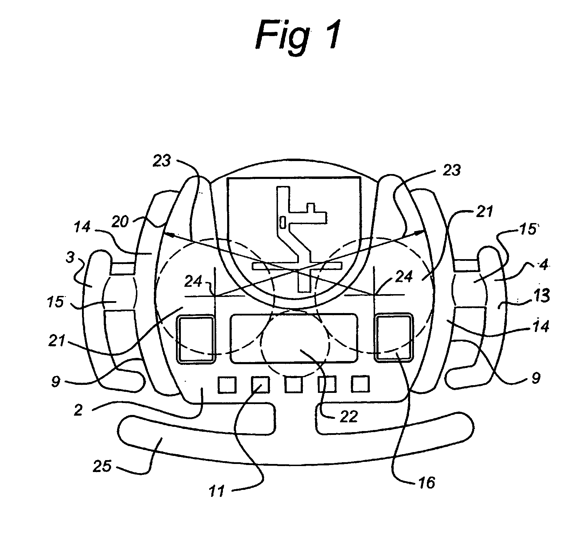

Fig. 1 shows a view in perspective of the steering device according to the invention.

The steering device 1 according to the invention comprises a base 2 which can be fixed to the vehicle interior at the location of the driver. This connection can be permanent, but can also be carried out as a click-on connection. In the latter case, the steering device can be applied or taken away at will, and can also be applied at the left hand or right hand driver's seat in case the required provisions are available in the dashboard of the vehicle.

Moreover, the steering device 1 may be carried out as a retractable unit. Upon driving, the steering device may in that case be in its normal steering position. When a car is parked, the steering device can be retracted so as to enable a comfortable seating procedure.

The steering device 1 furthermore comprises left hand and right hand steering grips 3, 4 at opposite sides of the base. These steering grips 3, 4 can be gripped by the hands of a driver; also, the driver may of course exert a steering action by gripping a single steering grip with only one hand.

For carrying out the steering movements, the steering grips 3, 4 are slid along the base 2 in mutually opposite direction.

In the embodiment shown, the steering grips 3, 4 each have an arch-shaped part, which by means of a spoke 15 is connected to the slide part 14. This slide part 14 is, in a manner known per se, e.g. by a linear bearing 9, connected to the base 2.

The base 2 furthermore comprises operating buttons 11 for carrying out several functions.

Moreover, signalling means 16 are provided which indicate the steering direction as carried out by the driver.

A route information planner is also installed on the base 2.

Alternatively, also an airbag may be provided.

Moreover, a hand rest 25 is provided.

The embodiment comprises handgrips 3, 4 which are slideable along the base 21 according to curved trajectories, which form part of a circular arc in the embodiment shown. The radii 23 of these circular arcs are larger than the mutual distance thereof. The centrepoints of these curved trajectories are indicated at 24.

Each hand grip 3, 4 at its side facing the base 2 has an accordingly curved tooth rack 20 (not shown), which each engage the schematically shown pinions 21. These pinions 21 are rotatably accommodated in the base 2 according to an axis at the centrepoint 24 of the curved trajectories. Each pinion 21 engages a central tooth wheel 22 which is connected to a steering control (not shown).

As a result of the engagement of tooth racks, pinions 21 and tooth wheel 22, the movement of the hand grips 3, 4 is linked, that is an upward movement of one of the steering grips 3, 4 automatically leads to a corresponding downward movement of the other of the steering grips 3, 4.

Moreover, the tooth wheel 21 can be connected to an electric motor for simulating steering resistance.

Furthermore, means may be provided which lock the steering grips 3, 4 with respect to the base 2 in the case of a power failure. Also, means may be provided which release the base 2 from its fixed position, so as to make it rotatable around a backup steering axis in such case of power failure. As a result, the steering device according to the invention can be used as a usual steering wheel, gripped at the steering grips 3, 4, when a power failure occurs.

## Claims

1. Steering device (1) for drive-by-wire functions in a vehicle, comprising a base (2) which can be fixed to the vehicle interior at the location of the driver, and two steering grips (3, 4) at opposite sides of the base, said steering grips (3, 4) being coupled and being moveable with respect to the base (2) in mutually opposite directions along a curved trajectory formed according to a circular arc, **characterized in that** each steering grip (3, 4) has a tooth rack (20) which is curved according to the circular arc, pinions (21) being rotatably accommodated in the base (2) which engage the curved tooth racks (20), wherein the pinions (21) each engage a central tooth wheel (22), said central tooth wheel (22) being connectable to a steering control.

2. Steering device according to claim 1, wherein the steering grips (3, 4) are slidable from their neutral position under the influence of a resistance device simulating steering resistance, e.g. a spring and/or an electric motor and/or hydraulic means.

3. Steering device according to claim 1 or 2, wherein at least one sensor is provided for sensing a movement of the handgrips, said sensor being in closed loop configuration with a steering control device.

4. Steering device according to one of the preceding claims, wherein the base (2) and/or the steering grips (3, 4) comprise(s) a display and operating buttons, e. g. for accelerating/decelerating, gear shifting, shifting indicators, lightning, route planning, telecommunication means, e.g. telephone.

5. Steering device according to one of the preceding claims, wherein the base (2) comprises an airbag.

6. Steering device according to one of the preceding claims, wherein each steering grip (3, 4) has a straight or arc-shaped outer circumference.

7. Steering device according to one of the preceding claims, wherein each steering grip (3, 4) has an arc-shaped rod (13), connected to a slide (14) which is slidable supported on the base (2).

8. Steering device according to claim 7, wherein the rod (13) and slide (14) of each steering grip are connected through a spoke (15).

9. Steering device according to one of the preceding claims, wherein the base (2) carries a head-up screen or LCD screen for displaying vehicle control and performance data, telecommunication means e.g. telephone, route planning.

10. Steering device according to one of the preceding claims, wherein signalling means (16) are provided for signally a left-hand and a right-hand turn.

11. Steering device according to any of the preceding claims, wherein the steering grips are parallelly moveable.

12. Steering device according to any of the claims 1 - 10, wherein the steering grips are moveably according to trajectories which are non-parallel.

13. Steering device according to claim 11 or 12, wherein each steering grip (3, 4) is slidable along the base by means of a linear bearing (9) e.g. a plain bearing.

14. Steering device according to any of the preceding claims, wherein the basis (2) comprises a hand rest (25) which extends past the hand grips.

15. Steering device according to claim 8, wherein the rod (13) is connected to the slide (14) through a pivot.

16. In combination, a steering device (1) according to one of the preceding claims, and a mechanically operated backup system for controlling prime vehicle safety functions, such as steering and braking in case of a power failure.

17. Combination according to claim 16, wherein locking means are provided for locking the steering grips (3, 4) with respect to the base (2) in the case of a power failure, said fixed base (2) being linked to the backup system and being released from a fixed position to a rotatable position in the case of said power failure.

18. In combination, a steering device according to any of claims 1 - 17, and a steering column structure comprising one or more foot pedals for e.g. acceleration and/or braking.

19. Combination according to claim 18, wherein the steering column structure comprises electric lines and connector for connection to the vehicle electrorucs car management.

## Patentansprüche

1. Lenkeinrichtung (1) fiir drive-by-wire-Funktionen in einem Fahrzeug, wobei ein Grundkörper (2) umfasst ist, welcher im Fahrzeuginneren am Fahrerplatz befestigt werden kann und zwei Lenkgriffe (3, 4) an gegenüberliegenden Seiten des Grundkörpers, wobei die Lenkgriffe (3, 4) verbunden und beweglich bezüglich des Grundkörpers (2) in beidseitig gegensätzlichen Richtungen entlang einer gekrümmten Bahn sind, welche entsprechend eines Kreisbogens ausgebildet ist, **dadurch gekennzeichnet, dass** jeder Lenkgriff (3, 4) eine Zahnstange (20) aufweist, die entsprechend des Kreisbogens gekrümmt ist, Ritzel (21), die drehbar in dem Grundkörper (2) aufgenommen sind, welche in die gekrümmten Zahnstangen (20) greifen, wobei die Ritzel (21) jeweils in ein zentrales Zahnrad (22) greifen und das zentrale Zahnrad (22) mit einer Lenksteuerung verbindbar ist.

2. Lenkeinrichtung nach Anspruch 1, wobei die Lenkgriffe (3, 4) aus ihrer neutralen Position unter dem Einfluss einer Widerstandseinrichtung verschiebbar sind, wobei die Widerstandseinrichtung Lenkwiderstand simuliert, beispielsweise eine Feder- und/oder ein Elektromotor und/oder hydraulische Mittel.

3. Lenkeinrichtung nach Anspruch 1 oder 2, wobei mindestens ein Sensor vorgesehen ist, um eine Bewegung der Handgriffe zu erfassen, wobei der Sensor in geschlossener Schleifenkonfiguration mit einer Lenksteuereinrichtung steht.

4. Lenkeinrichtung nach einem der vorherigen Ansprüche, wobei der Grundkörper (2) und/oder die Lenkgriffe (3, 4) eine Anzeige und Bedienungsknöpfe, zum Beispiel zum Beschleunigen/Abbremsen, Schalten, Schaltanzeigen, Beleuchtung, Routenplaner, Telekommunikationsmittel wie Telefon umfasst (umfassen).

5. Lenkeinrichtung nach einem der vorherigen Ansprüche, wobei der Grundkörper (2) einen Airbag umfasst.

6. Lenkeinrichtung nach einem der vorherigen Ansprüche, wobei jeder Lenkgriff (3,4) einen geraden oder bogenförmigen Umfang aufweist.

7. Lenkeinrichtung nach einem der vorherigen Ansprüche, wobei jeder Lenkgriff (3, 4) eine bogenförmige Stange (13) aufweist, welche mit einer Führung (14) verbunden ist, die verschiebbar an dem Grundkörper (2) gelagert ist.

8. Lenkeinrichtung nach Anspruch 7, wobei die Stange (13) und Führung (14) jedes Lenkgriffs mittels einer Speiche (15) verbunden sind.

9. Lenkeinrichtung nach einem der vorherigen Ansprüche, wobei der Grundkörper (2) einen Headup-Display oder LCD-Display trägt, um Fahrzeugsteuer- und Leistungsdaten, Telekommunikationsmittel, z.B. Telefon, Routenplanung, anzuzeigen.

10. Lenkeinrichtung nach einem der vorherigen Ansprüche, wobei Anzeigemittel (16) vorgesehen sind, um eine Links- und eine Rechtsdrehung anzuzeigen.

11. Lenkeinrichtung nach einem der vorherigen Ansprüche, wobei die Lenkgriffe parallel bewegbar sind.

12. Lenkeinrichtung nach einem der Ansprüche 1 bis 10, wobei die Lenkgriffe entlang von Bahnen bewegbar sind, die nicht parallel sind.

13. Lenkeinrichtung nach Anspruch 11 oder 12, wobei jeder Lenkgriff (3, 4) verschiebbar entlang des Grundkörpers mittels einer linearen Lagerung (9) ist, z.B. eines Gleitlagers.

14. Lenkeinrichtung nach einem der vorherigen Ansprüche, wobei der Grundkörper (2) eine Handstütze (25) umfasst, die über die Handgriffe hinausragt.

15. Lenkeinrichtung nach Anspruch 8, wobei die Stange (13) mit der Führung (14) über einen Drehpunkt verbunden ist.

16. Kombination einer Lenkeinrichtung (1) nach einem der vorherigen Ansprüche mit einem mechanisch arbeitenden Backup-System, um grundlegende Fahrzeugsicherheitsfunktionen zu steuern, wie Lenken und Bremsen im Falle eines Leistungsausfalls.

17. Kombination nach Anspruch 16, wobei Sperrmittel vorgesehen sind, um die Lenkgriffe (3, 4) bezüglich des Grundkörpers (2) im Falle eines Leistungsabfalls zu sperren, wobei der befestigte Grundkörper (2) mit dem Backup-System verbunden ist und aus einer starren Position in eine drehbare Position im Falle eines Leistungsabfalls freigegeben werden kann.

18. Kombination einer Lenkeinrichtung nach einem der Ansprüche 1 bis 17 mit einer Lenksäulenstruktur, welche eine oder mehrere Fußpedale umfasst, um beispielsweise zu beschleunigen und/oder zu bremsen.

19. Kombination nach Anspruch 18, wobei die Lenksäulenstruktur elektrische Leitungen und Anschluss umfasst, um Verbindung zu der Fahrzeugelektroniksteuereinheit herzustellen.

## Revendications

1. Dispositif de pilotage (1) pour des fonctions de conduite par fil dans un véhicule, comprenant une base (2) qui peut être fixée à l'intérieur du véhicule à l'emplacement du conducteur et deux poignées de pilotage (3, 4) sur les côtés opposés de la base, lesdites poignées de pilotage (3, 4) étant accouplées et pouvant être mobiles par rapport à la base (2) dans des directions opposées entre elles le long d'une trajectoire courbe formée selon un arc circulaire,
**caractérisé en ce que** chaque poignée de pilotage (3, 4) comporte une crémaillère (20) qui est courbe selon un arc circulaire, des pignons(21) étant logés de façon rotative dans la base (2) qui coopèrent avec les crémaillères courbes (20), dispositif dans lequel les pignons (21) coopèrent chacun avec une roue dentée centrale (22), ladite roue dentée centrale (22) pouvant être raccordée à une commande de pilotage.

2. Dispositif de pilotage selon la revendication 1, dans lequel les poignées de pilotage (3, 4) peuvent coulisser à partir de leur position neutre sous l'influence d'un dispositif à résistance simulant la résistance de pilotage, par exemple un ressort et/ou un moteur électrique et/ou des moyens hydrauliques.

3. Dispositif de pilotage selon la revendication 1 ou 2, dans lequel au moins un capteur est prévu pour détecter un mouvement des poignées manuelles, ledit capteur étant en configuration de boucle fermée avec un dispositif de commande de pilotage.

4. Dispositif de pilotage selon l'une des revendications précédentes, dans lequel la base (2) et/ou les poignées de pilotage (3, 4) comprend ou comprennent un affichage et des boutons de fonction, par exemple pour accélérer/décélérer, le changement de vitesse, des indicateurs de changement de vitesse, l'éclairage, le programme d'itinéraire, des moyens de télécommunication, par exemple téléphone.

5. Dispositif de pilotage selon l'une des revendications précédentes, dans lequel la base (2) comprend un coussin gonflable.

6. Dispositif de pilotage selon l'une des revendications précédentes, dans lequel chaque poignée de pilotage (3, 4) comporte une circonférence extérieure droite ou en forme d'arc.

7. Dispositif de pilotage selon l'une des revendications précédentes, dans lequel chaque poignée de pilotage (3, 4) comporte une tige en forme d'arc (13) raccordée à un coulisseau (14) qui peut coulisser sur la base (2).

8. Dispositif de pilotage selon la revendication 7, dans lequel la tige (13) et le coulisseau (14) de chaque poignée de pilotage sont raccordées par l'intermédiaire d'un rayon (15).

9. Dispositif de pilotage selon l'une des revendications précédentes, dans lequel la base (2) porte un écran tête haute ou écran LCD pour afficher les données de performance et de commande du véhicule, des moyens de télécommunication, par exemple téléphone, programmation d'itinéraire.

10. Dispositif de pilotage selon l'une des revendications précédentes, dans lequel des moyens de signalisation (16) sont prévus pour signaler la prise d'un virage à main gauche et à main droite.

11. Dispositif de pilotage selon l'une quelconque des revendications précédentes, dans lequel les poignées de pilotage sont mobiles parallèlement.

12. Dispositif de pilotage selon l'une quelconque des revendications 1-10, dans lequel les poignées de pilotage sont mobiles selon des trajectoires qui ne sont pas parallèles.

13. Dispositif de pilotage selon la revendication 11 ou 12, dans lequel chaque poignée de pilotage (3, 4) peut coulisser le long de la base au moyen d'un palier linéaire (9), par exemple un palier plein.

14. Dispositif de pilotage selon l'une quelconque des revendications précédentes, dans lequel la base (2) comprend un repose-main (25) qui s'étend devant les poignées manuelles.

15. Dispositif de pilotage selon la revendication 8, dans lequel la tige (13) est raccordée au coulisseau (14) par un pivot.

16. En combinaison, un dispositif de pilotage (1) selon l'une des revendications précédentes et un système d'assistance fonctionnant mécaniquement pour commander les principales fonctions de sécurité du véhicule, telles que le pilotage et le freinage, en cas de panne de puissance.

17. Combinaison selon la revendication 16, dans laquelle des moyens de verrouillage sont disposés pour verrouiller les poignées de pilotage (3, 4) par rapport à la base (2) en cas de panne de puissance, ladite base fixe (2) étant raccordée au système d'assistance et étant libérée à partir d'une position fixe vers une position rotative en cas de panne de puissance.

18. En combinaison, un dispositif de pilotage selon l'une quelconque des revendications 1-17 et une structure de colonne de pilotage comprenant une ou plusieurs pédales, par exemple pour l'accélération et/ou le freinage.

19. Combinaison selon la revendication 18, dans laquelle la structure de colonne de pilotage comprend des lignes électriques et un connecteur pour la connexion à la gestion de voiture électronique du véhicule.
